# EUROPEAN PATENT SPECIFICATION

(11) **EP 2 244 564 B1**
(45) Date of publication and mention of the grant of the patent: **02.04.2014**
(21) Application number: 09707835.6
(22) Date of filing: 04.02.2009
(51) Int. Cl.: A01K 97/02

(54) **Device for casting ground bait**
Vorrichtung zum Werfen von Grundfutter
Dispositif de lancer d'amorce pour la pêche

(30) Priority: 04.02.2008 GB 0801984; 24.12.2008 GB 0823551
(43) Date of publication of application: 03.11.2010
(73) Proprietor: SPOMB Limited, Sidcup Kent DA14 4 JH (GB)
(72) Inventor: HOUGHTON, Bryan Gary, Sidcup Kent DA14 4JH (GB)
(74) Representative: Casbon, Paul Richard
(86) International application number: PCT/GB2009/050103
(87) International publication number: WO 2009/098507

(56) References cited:
- WO-A-01/82691
- GB-A- 2 019 181
- GB-A- 2 432 768
- JP-A- 8 070 745
- JP-A- 2000 032 891
- US-A- 3 753 309

## Description

### Field of the Invention

The present invention relates to an angling accessory for placing ground bait at a particular location in a stretch of water when angling.

### Background to the Invention

Traditionally, in order to congregate fish in a particular area in a stretch of water and to encourage them to feed, an angler has formed a ball of bait of, for example, maggots in dough and has thrown them at the spot. This has inevitably been wasteful because the dough may not itself comprise the feeding medium, the dough has to be brought, or the ingredients thereof have to be brought, to the site, and because the dough may not completely free its occupants. The use of a cage or any means not employing a matrix holding the bait together risks not all the bait arriving at the intended location.

UK Patent Specification 2019181 discloses a weight suitable for being cast on a fisherman's line and which will open to release its contents.

The present invention provides means for an angler to place ground bait at a desired location in a stretch of water when about to fish.

### Summary of the Invention

The present invention provides a ground bait dispenser arranged to burst open upon impact with the water.

The present invention therefore concerns a device for use by an angler for casting ground bait and comprising a container into which ground bait can be loaded and having a tail end and a bow end and an attachment for attaching the container to a line and characterized in that the container comprises two substantially similar halves attached one to the other by a hinge at one end of the container and has means enabling the container to burst open and release the bait upon impact with water, according to claim 1.

According to features of the invention the container may have catch means associated with a weight whereby the catch means holds the container closed but upon impact with the water, continued travel by the weight frees the catch from the container and allows the container to open. The catch means and the weight may be attached to a fishing line so that while casting the catch holds the container closed. To this end, or as an alternative to attaching the catch to the line, the catch may include some means of slight positive engagement with the container, for example by detent or magnet. Alternatively the catch means and the weight may be held in the closed configuration by spring means such as an elastic member. Another way of keeping the catch engaged until opening is desired is for the line, or extension thereof, to pass around a loop attached to the catch and then be anchored, perhaps adjacent the proximal end of a container member, thus doubling the mechanical advantage employed by the line in holding the catch in the closure position.

If the shape of the containers is such that under casting force the bait might tend to urge the container open the catch means may be adapted to resist this.

The catch means may be arranged to be adjustable to cater for different bait loadings for example. Thus screw means may be incorporated, perhaps with an associated visual scale, for adjusting the strength of the catch. This may for example adjust the loading of a spring or the configuration of one magnet in relation to another.

Spring means may be employed to assist in driving the container open.

In order to fill completely the container with bait, the container may have a filler opening, preferably provided with movable closure means such as a slide.
Among the means for achieving bursting open of the container upon impact with the water are fins, suitably disposed flotation devices or chambers, spring means and making the container or part thereof of a rapidly soluble material. Any one or combination of these may be suitable for a given form of fishing. Where fins are used these may be splayed outwards at an acute angle and arranged so that faces thereof impact the water and thus drive the container halves apart. The fins may, if there is to be a catch in the region thereof, straddle the catch and may lightly retain the catch in place by means of friction.

Typical the angle of the fin to the container longitudinal axis may be 25° - 55°, with 45° perhaps being optimum. The fins may be interchangeable or their size and shape adjustable to suit various lines and conditions.

The fin principle may be constituted or assisted by an appropriate reverse slope to the container members' ends. This may not be desired if it were to impede full discharge of the container contents. However, an adjacent volume of the container might be required for ballast or flotation purposes. Indeed a compartment may be formed at the distal end of one or more of the container members, in which may be placed ballast or flotation material as required. The container may accordingly be constructed to act as a float after opening, by incorporating a flotation chamber, including foam perhaps, at the distal end of one member and perhaps suitable ballast means at the distal end of another or the other member.

It may be preferred that charging the container with bait occurs after the compartment members have been locked together. To this end one of the container members may incorporate filler means. Typically the filler means may comprise an opening in the container member coverable by a sliding lid. Preferably the sliding lid slides open towards the proximal end of the container, so that casting the dispenser tends to hold the lid closed.

In typical operation of a dispenser according to the invention, the line is cast bearing the loaded container. Upon impact with the water the catch is released and the fins force the container open and the contents thereof spill out. The container is then withdrawn and detached from the line, to which the hook (which expression includes other fish catching devices) is attached ready for the line to be recast. However the container may be arranged to contain both the ground bait and the baited hook or hooks and may be arranged also to be buoyant, even to act as, or be attached to, a float.

In another embodiment of the invention, in which the dispenser has an aerodynamic shape, and a body which is in two halves, and has a mouth at a bow or lead end thereof, a springloaded plunger is mounted on one body half and sited in the mouth and engages a detent on the other body half, whereby upon the dispenser striking water the plunger is driven to release the said other body half.

Advantageously there are fins at the rear or tail end of the dispenser, appropriate ones of which are hinged together for the opening of the dispenser.

The plunger spring compression is preferably adjustable.

In the context of angling suitable dimensions for the dispenser are 15cm long by 3cm diameter.

Making the container of a buoyant material can assist its deceleration and opening upon impact with the water.

The container members may be manufactured of a plastics material in a mould. Typically the body of the container may be made of polypropylene whilst the plunger and adjuster may be made of nylon and the spring of spring steel. Ideally then the hinge may be constituted by an appropriately thin portion of the moulded plastics material. Alternatively a lightweight, eg plastics, hinge may be attached or an adhesive strip member or metal or plastics or cord rings may form the hinge. Again, the interlocking hinge portions may be formed in the mould, with hollows and detents forming the fulcrum, so that the two halves of the moulding can be clipped together.

### Brief Description of the Drawings

Dispensers in accordance with the present invention will now be described by way of example with reference to the accompanying figures, of which:
Figure 1 is an isometric sketch of a first embodiment of a ground bait dispenser;
Figure 2 illustrates an example of the first embodiment of the invention, for use in depth fishing;
Figure 3 illustrates another example of the first embodiment of the invention, for use in surface fishing;
Figure 4 illustrates yet another example of the first embodiment of the invention, for bottom feeding;
Figures 5a and 5b illustrate the first embodiment of the bait dispenser having an adjustable mechanical catch;
Figures 6a and 6b illustrate the first embodiment of the bait dispenser having adjustable magnetic catch means;
Figure 7 is a sectional view of a second embodiment of the invention, in a closed configuration;
Figure 8 is a sectional view of the second embodiment of the invention, in an open configuration;
Figure 9 is a schematic isometric view of the second embodiment in an open configuration;
Figure 10 is a diagrammatic view of the second embodiment in an open configuration;
Figure 11 is an end view of a second embodiment fin arrangement;
Figures 12 to 14 depict hinge arrangements; and
Figures 15 - 16 are sectional views of a further embodiment of the invention.

### Description of the Preferred Embodiments

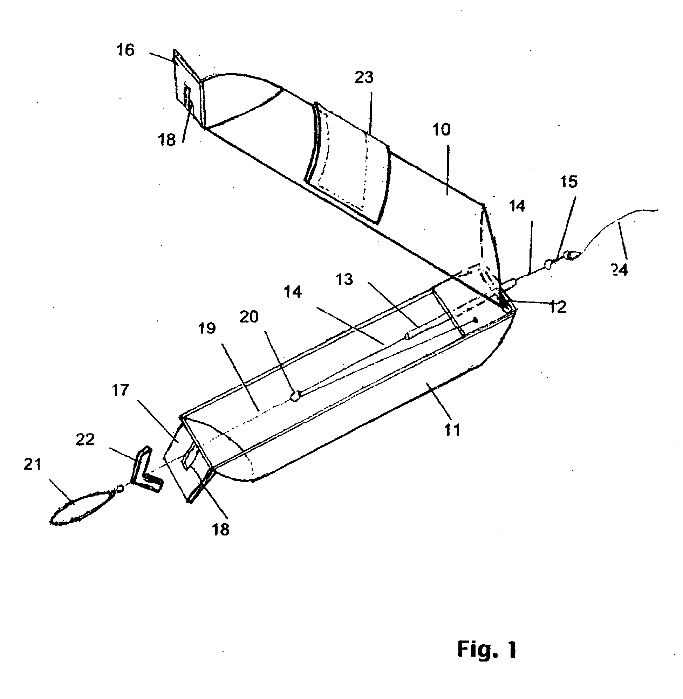

As shown in figure 1 the dispenser comprises a container in the form of two cylindrical halves 10, 11 attached one to the other at a proximal end by a hinge 12 and mating to define a bait containing hollow. Through the hinged end passes a tube 13 through which a portion of fishing line 14 may freely run. The line portion within the container passes around a ring 20 whence it is looped back and anchored adjacent the proximal end of the container. Outside the container the line 14 carries a line attachment link 15

At a distal end of the container each container half 10, 11 carries a fin 16, 17. The fins are splayed outwards 45° to the container axis with their faces contiguous with their respective container half ends. Each fin 16, 17 defines a passage 18. The distal ends of the container also define a passage. This passage is such as to allow free movement therethrough of a bar 19 attached at 20 to the portion of line 14. A weight 21 is attached to a distal end of the bar 19 as also, adjacent this, is a catch 22. The catch 22 fits snugly through the passages 17, 18 to engage on the container halves 10, 11 when closed.

The weight 21 is shaped as a cylindrical hydrofoil to assist ready motion through water. The catch 22 is also shaped to flow readily through water.

One half 10 of the container defines an opening covered by a slide 23. The slide 23 is arranged to open by sliding towards to hinge end of the container.

For use the device is attached at 15 to a fishing line 24. One half 11 of the container is filled with bait and the two halves locked together by the catch 22. With the slide 23 open more bait is stuffed into the container and the slide closed.

The line is then cast. Upon impact with the water the weight 21 continues to enter the water while the fins 16, 17 first hold the container back to cause the catch 22 to release then cause the two halves 10, 11 of the container to fly open and release their contents. The line 24 is then reeled in and the container replaced with a baited hook and float.

In the particular example the container is 15cm long and 3cm and the fins are at 45° to the container axis. The container is made of a lightweight plastics material and the hinge 12 of a flexible plastics material.

In an alternative embodiment the tube 13 is omitted and the line 14 replaced by an elastic thread attached at the proximal end of the container such that until impact with the water the elastic retains the catch 22 in place but expands due to the momentum of the weight 21 to permit the catch 22 to release the halves 10, 11.

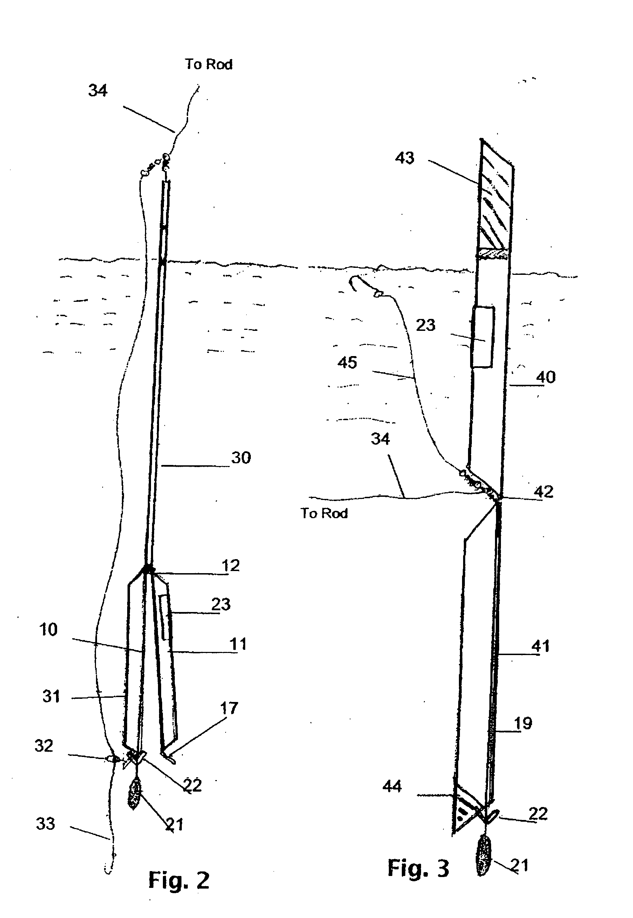

In the embodiment illustrated in figure 2 the container 10, 11 is attached to a float 30 and the catch 22 is held in place by elastic 31. An eye 32 keeps a fishing hook assembly 33 in the region of the container, the fishing hook assembly 33 being attached to a fishing line 34. Parts generally similar to those illustrated in figure 1 are similarly referenced.

The embodiment illustrated in figure 2 is intended for fishing a little distance below the surface of the water.

In the embodiment illustrated in figure 3, a dispenser container comprises two half cylinders 40, 41 hinged at a proximal end by a hinge 42. The proximal end of each container half 40, 41 is rebated 45° and is arranged for the fitment of flotation foam 43 and a weight 44 respectively. A hook assembly 45 is attached to the hinge 42 as is the line 34. The cord 19 holding the weight 21 is attached to the line 34 and the arrangement is such that until impact with the water the container is held closed by the catch 22. Upon impact with the water the catch 22 is pulled away from the container as the container is somewhat arrested while the weight 21 continues onward. The force of the water upon the rebated end surfaces of the halves 40, 41 drives those ends apart and allows dispensing of the container contents. The distal end of the container half 40 is arranged to protrude above the water surface and thus to be visible in the manner of the traditional fishing float. The distal end of the container half 41 depends below the container half 40 due to the weight 44. Parts generally similar to those illustrated in figure 1 are similarly referenced.

The embodiment illustrated in figure 3 is suitable for surface fishing where the hook is intended to be close to the surface of the water.

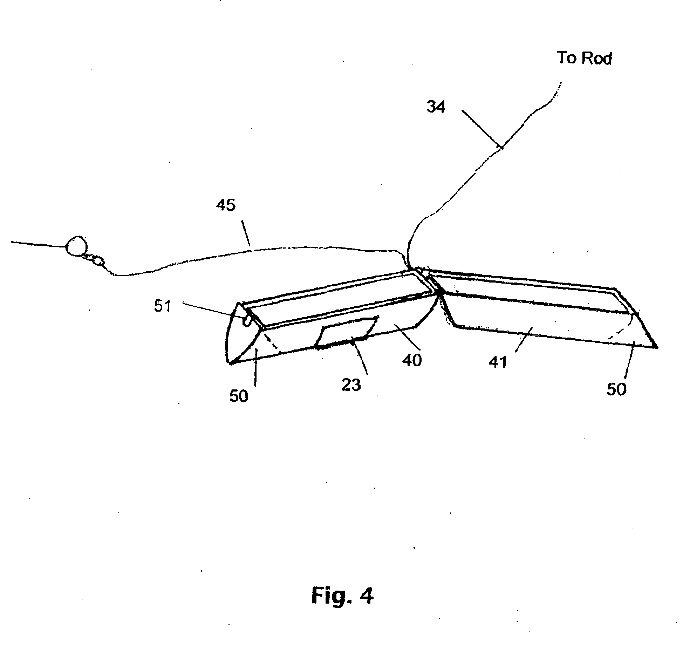

In the embodiment illustrated in figure 4 the distal ends of the members 40, 41 each contain a weight 50. The ends are also fitted with a small magnet 51 arranged to retain the container closed until impact with water when the force of the water upon the rebated distal ends will drive them apart.

The embodiment illustrated in figure 4 is arranged for bottom fishing, on the bed of the water.

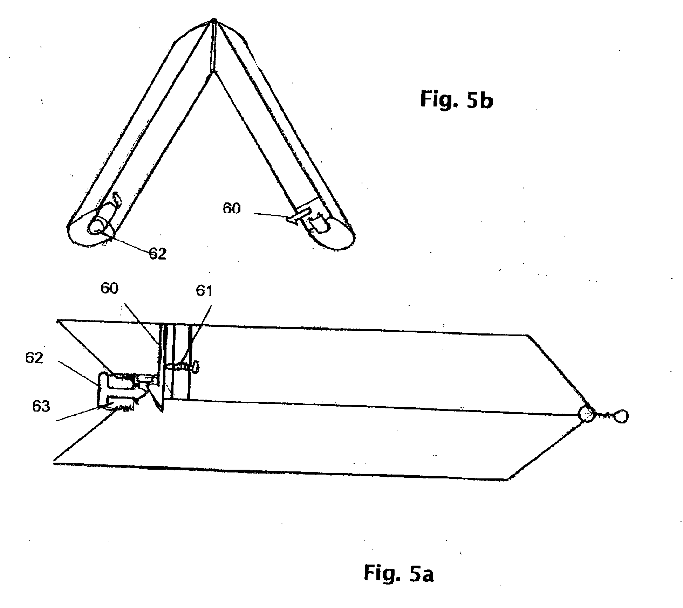

The dispenser illustrated in figures 5a and 5b has a catch 60 within the container members. Screw adjustable spring means 61 urge the catch 60 closed. Protruding from the distal end of the container is a pressure pad 62 arranged to float freely in the longitudinal direction and to bear upon the catch 60. The pad 62 is however keyed to an adjuster block 63 screwed into one the of container members.

Thus turning the pad 62 adjusts the extent to which it protrudes into the container and thus the travel required to open the catch 60.

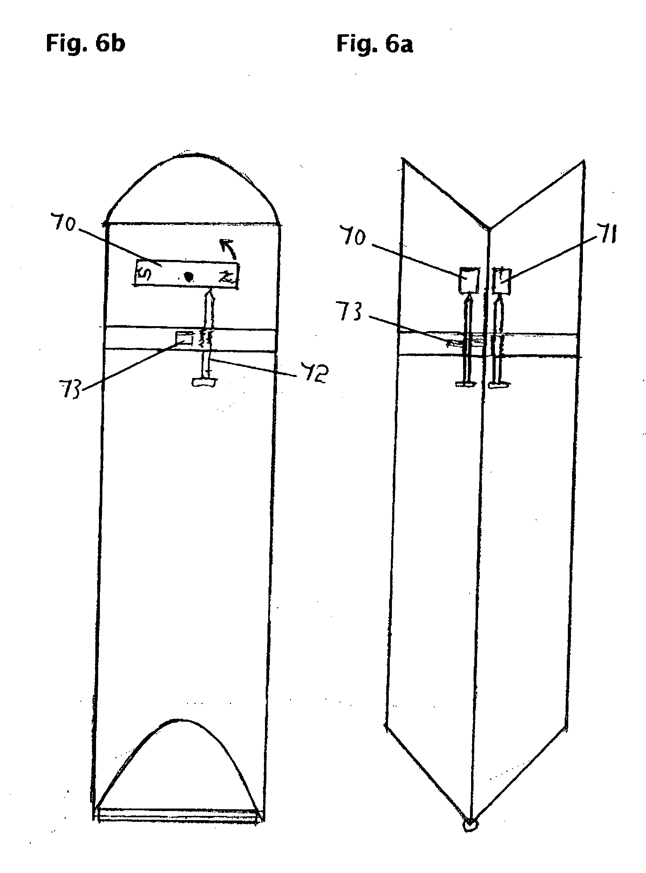

In the dispenser illustrated in figures 6a, 6b the catch is formed by rotatable magnets 70, 71 one mounted in each of the two containerhalves. Screw means 72 set the angle of the magnets to the container axis and thus the force by which the magnets hold the container halves together. Detent means 73 assist the alignment of the container halves one to the other when closed.

In some embodiments of the devices described with reference to figures 1 to 6 the two halves are formed in a single mould and the hinge 12, 42 is formed by making the moulded material thin at the hinge region.

In other embodiments a hinge portion is moulded wherein the interfitting members have lateral mating detents and pimples whereby the hinge is formed by snapping the two hinge parts together.

In yet other embodiments a hinge portion is moulded with the interfitting members not fully closed.

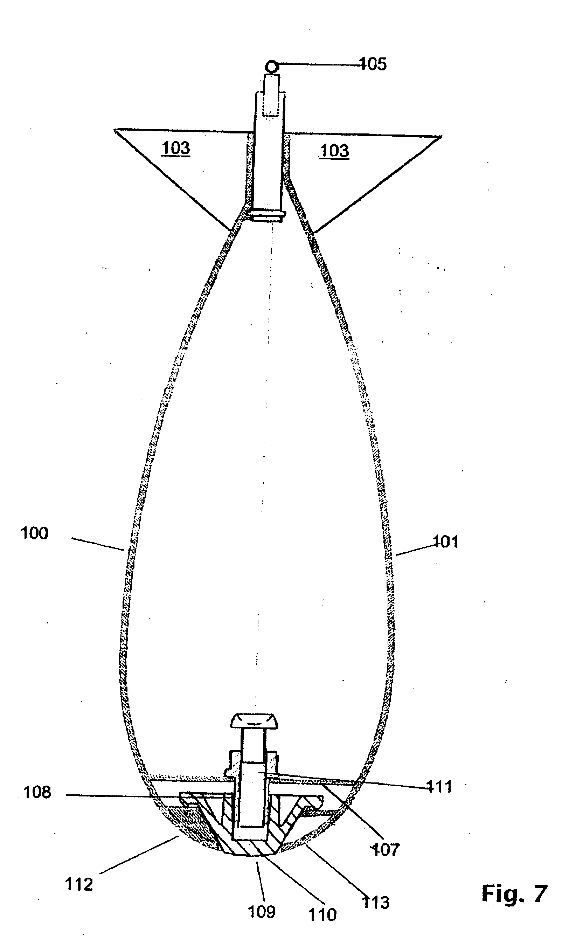

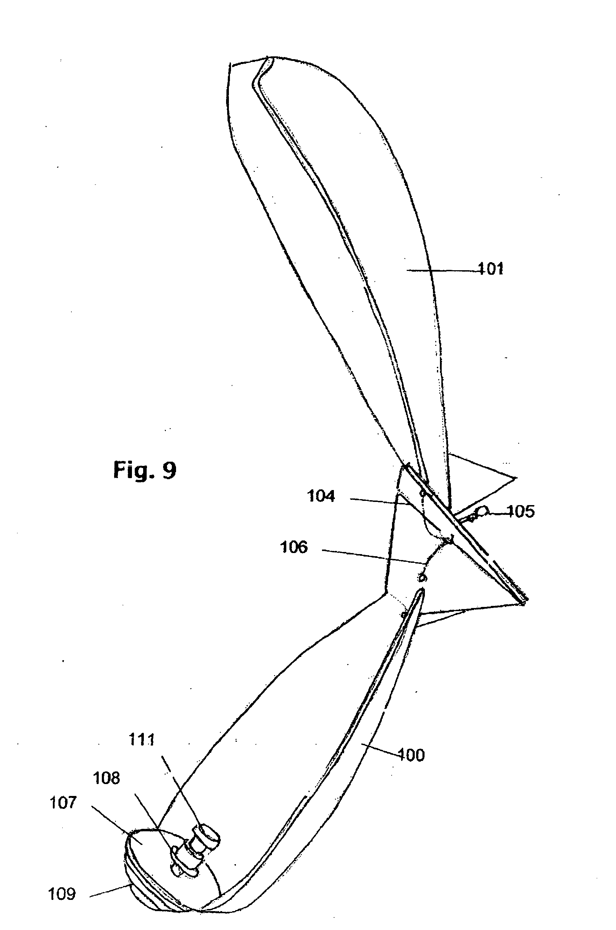

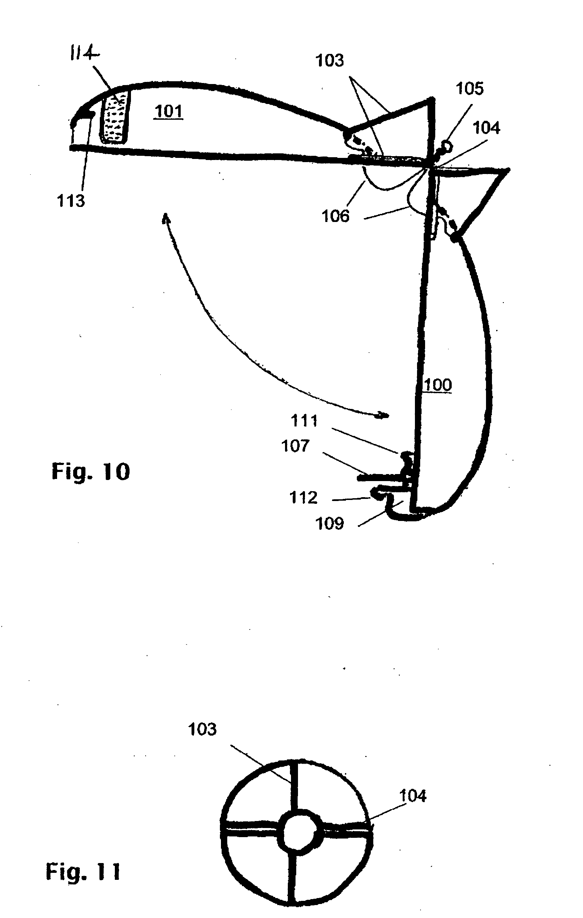

In the embodiment illustrated in figures 7 to 11 the opening of the dispenser is brought about by the impact of a plunger with the water when the line has been cast. Thus this embodiment comprises an aerodynamically shaped body in two halves 100, 101, each half 100, 101 having flight stabilising fins 103 at the proximal end thereof. At the mating face of the two halves 100,101 both have complementary fins 103, the proximal or tail end whereof are normal to the centre line of the dispenser and are hinged one to the other at 104. The body half 100 carries a line link 105 in which cords 106 are anchored to the two halves 100,101. Figure 11, being an end view, shows the fins 103, with those adjacent the mating faces of the body halves 100, 101 being hinged at 104.

At the distal, or bow end, the body half 100 carries a platform 107 upon which is centrally mounted a plunger holder 108. The plunger holder 108 carries a plunger 109 and incorporates a spring 110 and a spring stiffness adjuster 111.

The plunger 109 has a flange 112 which is arranged to engage on a detent 113 formed in the body half 101.

As shown the distal, bow or lead end of the two body halves are formed with a mouth to which the plunger 109 forms a continuum.

In one embodiment the two halves are formed in a single mould and the hinge 104 is formed by making the moulded material thin at the hinge region.

In another embodiment a hinge portion is moulded wherein the interfitting members have lateral mating detents and pimples whereby the hinge is formed by snapping the two hinge parts together.

In yet another embodiment a hinge portion is moulded with the interfitting members not fully closed.

In the embodiment as illustrated in figure 10 a foam block 114 is fitted to the body half 101, by which the dispenser is transformed into a float after discharging its contents.

In use of this second embodiment of the invention the body half 100 of the open bait dispenser is heaped with bait and the two body halves are then snapped shut. That is to say, the hinge 104 is closed and the flange 112 engaged on the detent 113 to hold the dispenser closed. If not already attached the dispenser is attached to a fishing line via the line link 105.

When the line is then cast, upon striking the water the plunger is pushed into the body halves 100, 101 against the spring 110, releasing the detent 113. Ingress of water between the plunger and the body halves assists in urging the body halves apart, to allow the bait to exit the dispenser.

Typically the bait dispenser of this second embodiment has an aspect ratio of approximately 3:1.

In a particular example of this second embodiment, recommended for use in carp fishing, the bait dispenser is 19 cm long and has a maximum diameter of 6.5cm

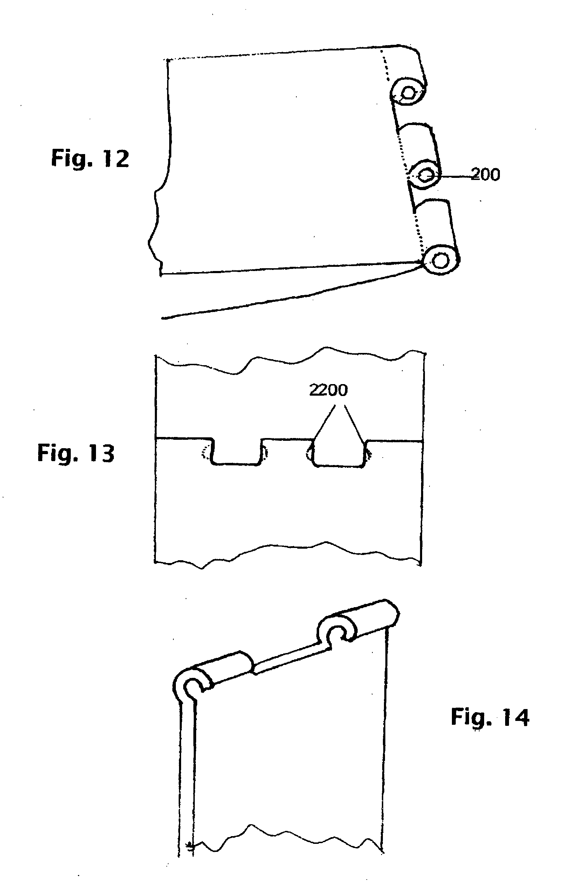

Figures 12 to 14 depict hinge arrangements. In figures 12 and 13 the hinges are moulded into the body halves with interfitting hinge members moulded with corresponding mating dimples and recesses 200 whereby the hinges may be snapped together.

In figure 14 the hinges are moulded with hook-shaped interfitting members to facilitate moulding.

It will be appreciated that, without departing at all from the scope of the present invention, the container halves may be formed with a compartment at the distal ends thereof for containing flotation foam, ballast, bait, one or more hooks, or nothing, as required.

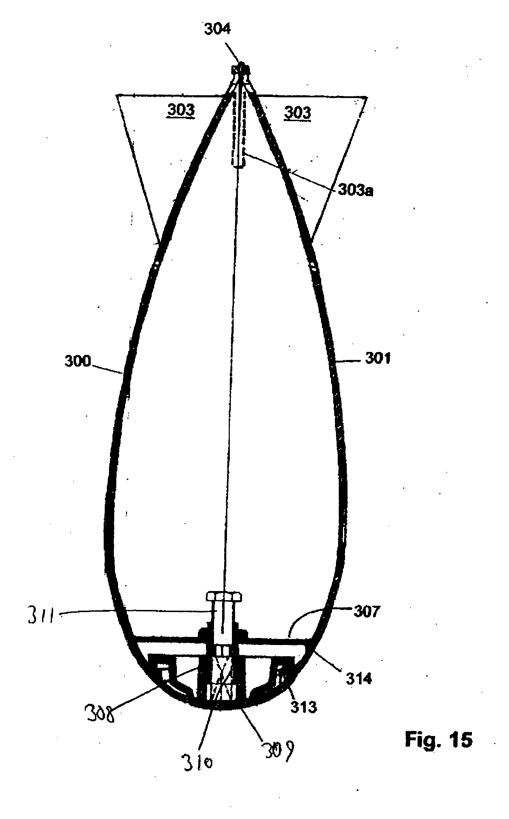

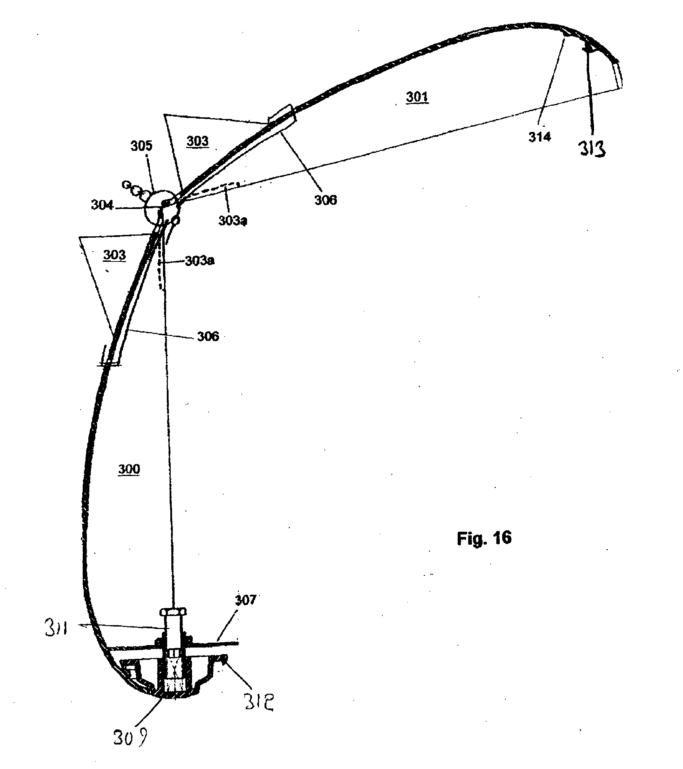

As with the embodiment illustrated in figures 7 to 11 so with the embodiment illustrated in figures 15 and 16, the opening of the dispenser is brought about by the impact of a plunger with the water when the line has been cast. Thus the embodiment illustrated in figures 15 and 16 comprises an aerodynamically shaped body in two halves 300, 301, each half 300, 301 having flight stabilising fins 303 at the proximal end thereof. At the mating face of the two halves 300, 301 both have complementary fins 303a, the proximal or tail ends whereof are normal to the centre line of the dispenser and are hinged one to the other at 304. The hinge 304 is called a "live hinge" and is formed by moulding the hinge as a membrane in the same plastics material along the span of the two fins 304a as part of the moulding of the two body halves 300, 301 together. Also the proximal end of the halves 300, 301 carry a line link 305 linking with wire springs 306 anchored to the two halves 300, 301. The purpose of the wire springs 306 is to relieve loading by the link 305 upon the hinge 304. By the line link 305 the dispenser is attached to the fishing line and to the fishing hooks.

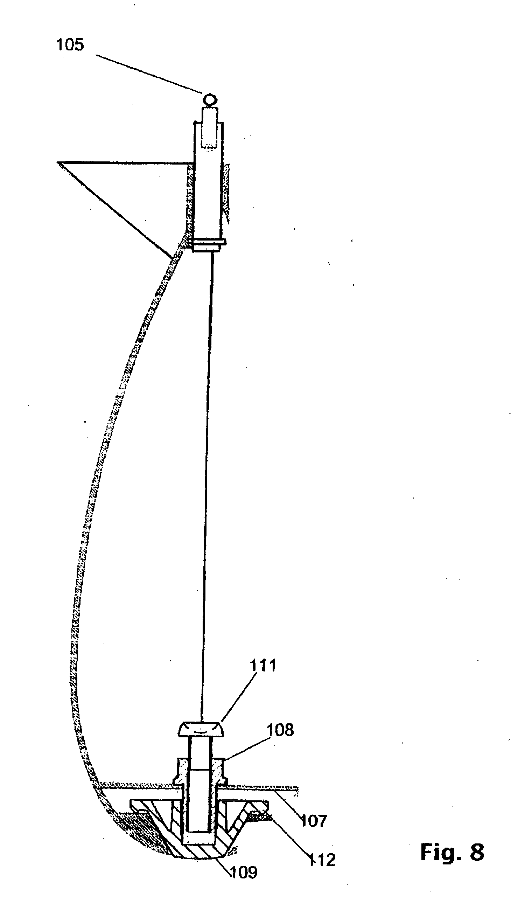

It will be noted that the fins 303 extend further forward than those 103 illustrated in figures 7, 8. Whilst only two fins 103, 303 could be used, four are preferred for consistency of line casting in windy conditions.

At the distal, or bow end, the body half 300 carries a platform 307 upon which is centrally mounted a plunger holder 308. The plunger holder 308 carries a plunger 309 and incorporates a spring 310 and a spring stiffness adjuster 311.

The plunger 309 has a flange 312 which is arranged to engage on a detent 313 formed in the body half 301. A ledge 314 is formed inside the body half 301 to locate the platform 307.

As shown the distal, bow or lead end of the two body halves are formed with a mouth to which the plunger 309 forms a continuum.

In use of this embodiment of the invention the body half 300 of the open bait dispenser is heaped with bait and the two body halves are then snapped shut. That is to say, the hinge 304 is closed and the flange 312 engaged on the detent 313 to hold the dispenser closed. If not already attached the dispenser is attached to a fishing line via the line link 305.

When the line is then cast, upon striking the water the plunger is pushed into the body halves 300, 301 against the spring 310, releasing the detent 313. Ingress of water between the plunger and the body halves assists in urging the body halves apart, to allow the bait to exit the dispenser.

It has been found that with appropriate spring lightness and plunger size this dispenser will burst open upon impact with water even if it is not the plunger that hits the water first.

Typically the bait dispenser of this embodiment has an aspect ratio of approximately 3:1.

In a particular example of this embodiment, recommended for use in carp fishing, the bait dispenser is 19 cm long and has a maximum diameter of 6.5cm.

This embodiment of the bait dispenser may also readily be made to act as a float, as with the embodiments described with reference to figures 1 to 5 of the accompanying drawings. This may be effected using a foam block or a hollow formed in one, or perhaps both body halves. The one not carrying the plunger may be preferred as the plunger carrying body half can then hang below the float carrying half in the water.

The embodiments illustrated in figures 6 to 11 and 15 - 16 are moulded in polypropylene, with the plunger and plunger adjuster formed of nylon and the spring formed of spring steel. Like parts in the embodiments illustrated in figures 1 to 5 may be formed of like materials.

## Claims

1. A device for use by an angler for casting ground bait and comprising a container (10, 11, 40, 41, 100, 101, 300, 301) into which ground bait can be loaded and having a tail end and a bow end and an attachment for attaching the container to a line and **characterized in that** the container comprises two substantially similar halves attached one to the other by a hinge (12, 42, 104, 304) at one end of the container and has means (16, 17, 21, 109) enabling the container to burst open and release the bait upon impact with water.

2. A device as claimed in claim 1 and wherein the container has catch means (22, 108, 112, 113, 310, 311, 312, 313) for holding the container closed until impact with water.

3. A device as claimed in claim 2 and wherein the catch means comprises a spring loaded plunger (109) at the bow end thereof.

4. A device as claimed in claim 3 and wherein the bow end of the two body halves define a mouth to which the plunger (109) forms a continuum.

5. A device as claimed in claim 3 or claim 4 and wherein the plunger spring compression is adjustable.

6. A device as claimed in any one of the preceding claims and having fins (103, 303) at the tail end thereof.

7. A device as claimed in claim 6 and having four said fins.

8. A device as claimed in claim 6 or claim 7 and wherein the hinge is formed at a tail edge of the fins.

9. A device as claimed in claim 8 and having a spring (306) at the tail end thereof.

10. A device as claimed in any one of the preceding claims and having an aerodynamic shape.

11. A device as claimed in any one of the preceding claims and which is buoyant.

12. A device as claimed in any one of the preceding claims and wherein the container is formed from polypropylene.

13. A device as claimed in any one of the preceding claims and wherein one container half has a filler opening.

14. A device as claimed in claim 13 and wherein the filler opening is coverable by a sliding lid.

15. A device as claimed in any one of the preceding claims and having a compartment at a distal end thereof.

16. A device as claimed in any one of the preceding claims and which is up to 30cm long and has an aspect ratio of up to about 5:1.

17. A device as claimed in any one of the preceding claims and having dimensions of the order of 10 to 20cm long by 3 to 10cm diameter.

## Patentansprüche

1. Vorrichtung zur Verwendung durch einen Angler zum Auswerfen von Grundköder, welche einen Behälter (10, 11, 40, 41, 100, 101, 300, 301) umfasst, in welchen Grundköder geladen werden kann, und welche ein hinteres Ende und ein gebogenes Ende und eine Befestigung zum Befestigen des Behälters an einer Schnur hat, **dadurch gekennzeichnet, dass** der Behälter zwei im Wesentlichen ähnliche Hälften, welche miteinander durch ein Scharnier (12, 42 104, 304) an einem Ende des Behälters befestigt sind, und Mittel (16, 17, 21, 109) hat, welche den Behälter beim Zusammenbringen mit Wasser aufplatzen und Köder frei werden lassen.

2. Vorrichtung gemäß Anspruch 1, wobei der Behälter Einrastmittel (22, 108, 112, 113, 310, 311, 312, 313) hat, um den Behälter bis zum Zusammenbringen mit Wasser geschlossen zu halten.

3. Vorrichtung gemäß Anspruch 2, wobei das Einrastmittel einen federgespannten Kolben (109) an deren gebogenen Ende umfasst.

4. Vorrichtung gemäß Anspruch 3, wobei die gebogenen Enden der zwei Körperhälften eine Öffnung definieren, zu welcher der Kolben (109) ein Kontinuum bildet.

5. Vorrichtung gemäß Anspruch 3 oder Anspruch 4, wobei die Kolbenfederkompression einstellbar ist.

6. Vorrichtung gemäß einem der vorangehenden Ansprüche, welche Finnen (103, 303) am hinteren Ende davon hat.

7. Vorrichtung gemäß Anspruch 6, welche vier dieser Finnen hat.

8. Vorrichtung gemäß Anspruch 6 oder Anspruch 7, wobei das Scharnier an dem hinteren Ende der Finnen ausgebildet ist.

9. Vorrichtung gemäß Anspruch 8, welche eine Feder (306) an deren hinteren Ende hat.

10. Vorrichtung gemäß einem der vorangehenden Ansprüche, welche eine aerodynamische Form hat.

11. Vorrichtung gemäß einem der vorangehenden Ansprüche, welche schwimmfähig ist.

12. Vorrichtung gemäß einem der vorangehenden Ansprüche, wobei der Behälter aus Polypropylen gebildet ist.

13. Vorrichtung gemäß einem der vorangehenden Ansprüche, wobei eine Behälterhälfte eine Einfüllöffnung hat

14. Vorrichtung gemäß Anspruch 13, wobei die Einfüllöffnung durch einen Schiebedeckel abdeckbar ist.

15. Vorrichtung gemäß einem der vorangehenden Ansprüche, welche eine Kammer an einem äußeren Ende hat.

16. Vorrichtung gemäß einem der vorangehenden Ansprüche, welche bis zu 30 cm lang ist und ein Seitenverhältnis von bis zu 5:1 hat.

17. Vorrichtung gemäß einem der vorangehenden Ansprüche, welche Abmessungen in der Größenordnung von 10 bis 20 cm lang bei einem Durchmesser von 3 bis 10 cm hat.

## Revendications

1. Dispositif destiné à être utilisé par un pêcheur à la ligne pour lancer une amorce en grains et comportant un conteneur (10, 11, 40, 41, 100, 101, 300, 301) dans lequel l'amorce en grains peut être chargée et présentant une extrémité de queue et une extrémité de tête et une fixation permettant de fixer le conteneur à une ligne et **caractérisé en ce que** le conteneur comporte deux moitiés essentiellement similaires attachées l'une à l'autre par une articulation (12, 42, 104, 304) au niveau d'une extrémité du conteneur et comporte des moyens (16, 17, 21, 109) permettant au conteneur de s'ouvrir en éclatant et de libérer l'amorce lors de l'impact avec l'eau.

2. Dispositif selon la revendication 1 et dans lequel le conteneur comporte des moyens de fermeture (22, 108, 112, 113, 310, 311, 312, 313) permettant de maintenir le conteneur fermé jusqu'à l'impact avec l'eau.

3. Dispositif selon la revendication 2 et dans lequel les moyens de fermeture comprennent un piston chargé par ressort (109) au niveau de son extrémité de tête.

4. Dispositif selon la revendication 3 et dans lequel l'extrémité de tête des deux moitiés de corps définit une ouverture pour laquelle le piston (109) forme un élément de continuité.

5. Dispositif selon la revendication 3 ou la revendication 4 et dans lequel la compression du ressort de piston est réglable.

6. Dispositif selon l'une quelconque des revendications précédentes et comportant des ailettes (103, 303) au niveau de son extrémité de queue.

7. Dispositif selon la revendication 6 et comportant quatre dites ailettes.

8. Dispositif selon la revendication 6 ou la revendication 7 et dans lequel l'articulation est formée au niveau d'un bord de queue des ailettes.

9. Dispositif selon la revendication 8 et comportant un ressort (306) au niveau de son extrémité de queue.

10. Dispositif selon l'une quelconque des revendications précédentes et présentant une configuration aérodynamique.

11. Dispositif selon l'une quelconque des revendications précédentes et lequel est flottable.

12. Dispositif selon l'une quelconque des revendications précédentes et dans lequel le conteneur est formé de polypropylène.

13. Dispositif selon l'une quelconque des revendications précédentes et dans lequel une moitié de conteneur présente une ouverture de remplissage.

14. Dispositif selon la revendication 13 et dans lequel l'ouverture de remplissage peut être recouverte par un couvercle coulissant.

15. Dispositif selon l'une quelconque des revendications précédentes et comportant un compartiment au niveau de son extrémité distale.

16. Dispositif selon l'une quelconque des revendications précédentes et qui présente une longueur allant jusqu'à 30 cm et qui présente un rapport de format allant jusqu'à 5:1 environ.

17. Dispositif selon l'une quelconque des revendications précédentes et présentant des dimensions de l'ordre de 10 à 20 cm de long par 3 à 10 cm de diamètre.
